(19) Europäisches Patentamt
European Patent Office
Office européen des brevets

(11) **EP 3 779 234 B1**

(12) **EUROPÄISCHE PATENTSCHRIFT**

(45) Veröffentlichungstag und Bekanntmachung des Hinweises auf die Patenterteilung:
**09.06.2021 Patentblatt 2021/23**

(51) Int Cl.:
***F16F 15/10*** *(2006.01)*

(21) Anmeldenummer: **20185435.3**

(22) Anmeldetag: **13.07.2020**

(54) **VERFAHREN ZUR ÜBERWACHUNG EINES DREHSCHWINGUNGSDÄMPFERS**

METHOD FOR MONITORING AN OSCILLATION DAMPER

PROCÉDÉ DE SURVEILLANCE D'UN AMORTISSEUR DE VIBRATIONS TORSIONNELLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2019 CH 10072019**

(43) Veröffentlichungstag der Anmeldung:
**17.02.2021 Patentblatt 2021/07**

(73) Patentinhaber: **Liebherr Machines Bulle SA
1630 Bulle (CH)**

(72) Erfinder:
• **Dr. Henninger, Christoph
1010 Lausanne (CH)**
• **Stadelmann, Martin
1719 Brünisried (CH)**

(74) Vertreter: **Behr, Wolfgang
Lorenz Seidler Gossel
Rechtsanwälte Patentanwälte
Partnerschaft mbB
Widenmayerstraße 23
80538 München (DE)**

(56) Entgegenhaltungen:
**EP-A1- 2 143 973       EP-A1- 3 242 055
DE-A1-102008 032 708**

**Beschreibung**

Die vorliegende Erfindung betrifft ein Verfahren und eine Vorrichtung zur Überwachung eines in einem Antriebssystem enthaltenen Drehschwingungsdämpfers.

Drehschwingungen sind in der Antriebs- und Motorentechnik ein allgegenwärtiges Thema. Kurbelwellen von Hubkolbenmotoren neigen aufgrund der starken Drehmomentschwankung der einzelnen Kurbeltriebe zu Drehschwingungen. Ebenso können Nockenwellen von vielzylindrischen Motoren durch die Ventiltriebe oder durch an die Nockenwelle angeschlossene Aggregate wie Kompressoren zu Drehschwingungen angeregt werden. In Antriebssträngen können sich durch die periodische Drehmomentschwankung von Hubkolbenmotoren oder von Verbrauchern wie Kompressoren oder Schiffspropeller etc. Drehschwingungen aufbauen. Drehschwingungen gehen naturgemäss mit einer dynamischen Torsionsbelastung der betreffenden Komponenten einher, welche die oftmals dauerfest ertragbaren Belastungsamplituden überschreitet. Um ein Versagen der Komponente und damit der gesamten Maschine bzw. Anlage zu vermeiden, muss die dynamische Belastung durch geeignete Massnahmen wie Entkoppelung oder Bedämpfung auf ein ertragbares Mass reduziert werden. Oftmals kommen hierzu spezielle, auf das jeweilige Schwingungssystem abgestimmte Drehschwingungsdämpfer zum Einsatz. Die meisten Bauarten von Drehschwingungsdämpfern basieren dabei auf der dämpfenden Wirkung viskoser oder viskoelastischer Stoffe, welche naturgemäss einem Alterungs- und Verschleissprozess unterliegen.

Ein Versagen von Schwingungsdämpfern kann prinzipiell durch ein Zustandsüberwachungssystem vermieden werden. Dieses detektiert ein mögliches Versagen der Funktion des Dämpfers durch Erfassen und Überwachen geeigneter Messgrössen. Für die Überwachung von Drehschwingungsdämpfern finden sich in der Patentliteratur mehrere einander ähnliche, jedoch im Detail verschiedene Ansätze:
Dabei zeigen die Druckschriften US7334552B2, DE 10 2006 015 867, EP 0478529 und EP 2 143 973 jeweils Systeme, welche auf dem Prinzip der Symptomerkennung basieren. So wird das beginnende Versagen des Dämpfers anhand einer oder mehrerer Sensoren detektiert. Diese relativ späte Versagenserkennung hat den Nachteil, dass zeitnah der Austausch oder die Reparatur des Dämpfers vorgesehen werden muss. Bis dahin ist ggf. eine Leistungsdrosselung notwendig, um einen Schaden am Motor, der Maschine oder der Anlage zu vermeiden. Eine positive Rückmeldung eines solchen Systems stellt lediglich eine Aussage über die momentane Funktionstüchtigkeit des Dämpfers dar. Es erlaubt in nur sehr eingeschränkter Weise einen Ausblick auf die Funktiontüchtigkeit in der nahen Zukunft. Ob diese nach einer weiteren Nutzungsdauer von wenigen Tagen oder Stunden noch vorliegen wird, ist also völlig unklar.

Druckschrift EP 3 242 055 B1 zeigt einen Verschleißindikator für einen Dämpfer, welcher die in das viskose Dämpfungsmedium eingebrachte Gesamtwärmemenge bestimmt, und hierfür die Temperatur des Dämpfungsmediums über die Zeit integriert. Die Erfinder der vorliegenden Erfindung haben jedoch festgestellt, dass die in das viskose Dämpfungsmedium eingebrachte Gesamtwärmemenge keine zuverlässige Bestimmung des Verschleißzustands erlaubt.

Aufgabe der vorliegenden Erfindung ist es daher, ein verbessertes Verfahren und eine verbesserte Vorrichtung zur Überwachung eines in einem Antriebssystem enthaltenen Drehschwingungsdämpfers zur Verfügung zu stellen.

Diese Aufgabe wird durch ein Verfahren gemäß Anspruch 1 und ein System gemäß Anspruch 13 gelöst.

Bevorzugte Ausgestaltungen der vorliegenden Erfindung sind Gegenstand der Unteransprüche.

Die vorliegende Erfindung umfasst ein Verfahren zur Überwachung eines an einem Antriebssystem angeordneten Drehschwingungsdämpfers, mit den Schritten:

- Bestimmen mindestens eines Betriebs- und/oder Umweltparameters des Antriebssystems und/oder des Drehschwingungsdämpfers;
- Bestimmen einer aktuellen Schädigungsrate anhand des mindestens einen Betriebs- und/oder Umweltparameters;
- Integration der aktuellen Schädigungsrate zur Bestimmung eines aktuellen Schädigungszustands des Drehschwingungsdämpfers.

Die vorliegende Erfindung schafft so ein zuverlässiges sowie kostengünstiges Verfahren, welches eine weiter vorausschauende konservative Schadensprognose, d.h. eine Prognose über den Verschleisszustand und die Restlebensdauer ermöglicht, bevor erste Anzeichen des Versagens der Komponente feststellbar sind.

Im Gegensatz zu den oben aufgeführten symptombasierten Überwachungssystemen bietet der in dieser Patentanmeldung beschriebene Ansatz den Vorteil, dass ein mögliches Versagen schon weit im Voraus prognostiziert werden kann. Durch einen solchen prädiktiven Charakter des erfindungsgemässen Systems wird sichergestellt, dass einerseits ein notwendig werdender Eingriff (z.B. ein Austausch oder eine Reparatur) rechtzeitig angezeigt wird, sodass die Behebung geplant und während eines regulären Wartungstermins vorgenommen werden kann. Andererseits wird jedoch vermieden, dass aus Unwissenheit ein verfrühter Eingriff vorgenommen wird. Je nach Ausführung kommt das erfindungsgemässe System auch gänzlich ohne zusätzliche Sensorik aus.

Weiterhin erlaubt die vorliegende Erfindung anders als die EP 3 242 055 B1 eine sehr viel zuverlässigere Bestimmung des tatsächlichen Schädigungszustands, da nicht die Temperatur über die Zeit integriert wird, sondern eine auf Grundlage eines Betriebs- und/oder Umweltparameters wie der Temperatur bestimmte aktuelle Schädigungsrate. Dies beruht auf der Erkenntnis der Erfinder der vorliegenden Erfindung, dass die aktuelle Schädigungsrate im allgemeinen nicht-linear von der Temperatur abhängt und insbesondere bei höheren Temperaturen stark ansteigt, so dass die Wärmemenge keine brauchbare Größe zur Bestimmung des Schädigungszustands darstellt. Durch die erfindungsgemäße Integration der aktuellen Schädigungsrate anstelle der Temperatur ergibt sich so für den aktuellen Schädigungszustand ein sehr viel brauchbarerer Wert, welcher nicht mit der eingebrachten Wärmemenge korreliert.

Die Verwendung eines erfindungsgemässen Verfahrens bzw. Systems führt zur Kosteneinsparung und zu einer Risikominderung eines Systemausfalls.

In einer möglichen Ausgestaltung der vorliegenden Erfindung hängt die erfindungsgemäß bestimmte aktuelle Schädigungsrate nicht-linear von dem mindestens einen Betriebsparameter und/oder Umweltparameter und/oder einer hieraus berechneten Größe ab.

Bevorzugt gibt die Bestimmung dabei für eine Mehrzahl und bevorzugt mehr als 3 und weiter bevorzugt mehr als 5 oder 10 unterschiedliche Werte des Betriebsparameters und/oder Umweltparameters und/oder der hieraus berechneten Größe jeweils unterschiedliche Werte der aktuellen Schädigungsrate aus.

In einer möglichen Ausgestaltung der vorliegenden Erfindung wird die aktuelle Schädigungsrate auf Grundlage einer Temperatur des Drehschwingungsdämpfers und/oder des Dämpfungsmediums berechnet, wobei die Temperatur des Drehschwingungsdämpfers und/oder des Dämpfungsmediums bevorzugt bestimmt, insbesondere berechnet oder gemessen, wird und als Parameter in die Bestimmung eingeht.

Bevorzugt hängt die die erfindungsgemäß bestimmte aktuelle Schädigungsrate nicht-linear von einer Temperatur des Drehschwingungsdämpfers und/oder des Dämpfungsmediums ab, welche bevorzugt bestimmt, insbesondere berechnet oder gemessen, wird und als Parameter in die Bestimmung eingeht.

Beispielsweise kann die Schädigungsrate mittels eines Kennfeldes oder einer nichtlinearen Funktion, in welche der mindestens eine Betriebsparameter und/oder Umweltparameter und/oder eine hieraus berechnete Größe, insbesondere die Temperatur des Drehschwingungsdämpfers und/oder des Dämpfungsmediums, als Eingangsgröße eingeht, bestimmt werden.

Insbesondere gibt die Funktion und/oder das Kennfeld dabei für eine Mehrzahl und bevorzugt mehr als 5 und weiter bevorzugt mehr als 10 unterschiedliche Werte der Eingangsgröße jeweils unterschiedliche Werte der Ausgangsgröße aus.

In einer möglichen Ausgestaltung der vorliegenden Erfindung erfolgt die Bestimmung der Schädigungsrate auf Grundlage eines Modells des Schädigungsverhaltens des Drehschwingungsdämpfers. Insbesondere beschreibt dieses Modell die aktuelle Schädigungsrate des Drehschwingungsdämpfers auf Grundlage eines oder mehrerer Betriebs- und/oder Umweltparameter.

In einer möglichen Ausgestaltung der vorliegenden Erfindung beschreibt das Modell die oben bereits erwähnte nicht-lineare Abhängigkeit der aktuellen Schädigungsrate von dem mindestens einen Betriebs- und/oder Umweltparameter und/oder einer hieraus bestimmten Größe.

In einer möglichen Ausgestaltung der vorliegenden Erfindung handelt es sich um ein physikalisch-chemisches Modell des Schädigungsverhaltens.

In einer möglichen Ausgestaltung der vorliegenden Erfindung beschreibt eine erste Komponente des Modells ein aktuelles Schwingungsverhalten des Antriebssystems und des Drehschwingungsdämpfers und/oder eine hierauf beruhende Verlustleistung des Drehschwingungsdämpfers. Insbesondere hängt das Schwingungsverhalten des Antriebssystems und des Drehschwingungsdämpfers von Betriebsparametern wie der Drehzahl und/oder der Leistung des Primärantriebs ab, was durch die erste Komponente abgebildet wird.

In einer möglichen Ausgestaltung der vorliegenden Erfindung beschreibt eine zweite Komponente des Modells ein thermodynamisches Verhalten des Drehschwingungsdämpfers. Insbesondere erhält die zweite Komponente eine Verlustleistung des Drehschwingungsdämpfers als Eingangsgröße und/oder gibt eine aktuelle Temperatur des Drehschwingungsdämpfers als Ausgangsgröße aus. Insbesondere bildet die zweite Komponente damit die Wärmeflüsse in den Drehschwingungsdämpfer und aus dem Drehschwingungsdämpfer ab.

In einer möglichen Ausgestaltung der vorliegenden Erfindung bestimmt eine dritte Komponente des Modells auf Grundlage einer oder mehrerer Eingangsgrößen eine aktuelle Schädigungsrate des Drehschwingungsdämpfers. Insbesondere handelt es sich bei der Eingangsgröße dabei um eine Größe, welche von einer anderen Komponente des Modells bestimmt wurde. Insbesondere bestimmt die dritte Komponente des Modells die aktuelle Schädigungsrate des Drehschwingungsdämpfers auf Grundlage der Temperatur des Drehschwingungsdämpfers.

In einer möglichen Ausgestaltung der vorliegenden Erfindung wird bei der Bestimmung der Schädigungsrate eine zusätzliche Abhängigkeit der Schädigungsrate vom aktuellen Verschleisszustand berücksichtigt. Insbesondere kann dies in der dritten Komponente erfolgen. Gegebenenfalls ist daher eine Erweiterung der dritten Komponente sinnvoll, durch die eine Abhängigkeit der Schädigungsrate vom aktuellen Verschleisszustand berücksichtigt wird.

In einer möglichen Ausgestaltung der vorliegenden Erfindung sind eine oder mehrere Komponenten, welche zur Bestimmung der aktuellen Schädigungsrate eingesetzt werden, als Kennfeld implementiert und/oder enthalten ein implementiertes Kennfeld.

In einer möglichen Ausgestaltung der vorliegenden Erfindung sind die erste und/oder die dritte Komponente als Kennfeld implementiert. In erster Näherung kann dabei der Einfluss des Verlaufs dieser Eingangsgrößen in der Vergangenheit auf die durch diese Komponenten beschriebenen physikalischen und/oder chemischen Prozesse vernachlässigt werden.

In einer möglichen Ausgestaltung der vorliegenden Erfindung berücksichtigt die zweite Komponente den zeitlichen Verlauf einer Eingangsgröße, insbesondere der Verlustleistung. Insbesondere bilanziert die zweite Komponente dabei die Wärmezufuhr zum Drehschwingungsdämpfer und die Wärmeabfuhr aus dem Drehschwingungsdämpfer.

In einer möglichen Ausgestaltung der vorliegenden Erfindung wird die Temperatur des Drehschwingungsdämpfers durch einen Sensor bestimmt und geht als Eingangsgröße in die Bestimmung der aktuellen Schädigungsrate und insbesondere das hierfür eingesetzte Modell ein. In diesem Fall kann in einer ersten Variante auf die erste und die zweite Komponente des Modells verzichtet werden und die gemessene Temperatur des Drehschwingungsdämpfers als bevorzugt einzige Eingangsgröße in die dritte Komponente eingehen. In einem zweiten Fall kann die Messung die Bestimmung von Eingangsgrößen für die dritte Komponente durch die erste und/oder die zweite Komponente unterstützen. Beispielsweise kann die erste Komponente einen oder mehrere Parameter des Schwingungsverhaltens des Drehschwingungsdämpfers bestimmen, welcher als weitere Eingangsgröße in die dritte Komponente eingeht.

In einer möglichen Ausgestaltung der vorliegenden Erfindung wird mindestens ein im Antriebssystem vorliegender Drehzahl- und/oder ein Leistungswert als Betriebsparameter genutzt und gehen als Eingangsparameter in die Bestimmung ein. Insbesondere handelt es sich dabei um Eingangsgrößen der ersten Komponente.

In einer möglichen Ausgestaltung der vorliegenden Erfindung werden der Drehzahl- und/oder der Leistungswert von einer Steuerung abgefragt. Hierdurch kann auf eine zusätzliche Sensorik verzichtet werden.

In einer möglichen Ausgestaltung der vorliegenden Erfindung werden mindestens ein Temperaturwert und/oder mindestens ein Umgebungstemperaturwert und/oder ein Fahrgeschwindigkeitswert als Umwelt- und/oder Betriebsparameter genutzt und gehen als Eingangsparameter in die Bestimmung ein. Insbesondere gehen diese als Eingangsparameter in die zweite Komponente ein, da sie einen Einfluss auf den Wärmeabfluss aus dem Drehschwingungsdämpfer haben.

In einer möglichen Ausgestaltung der vorliegenden Erfindung werden einer oder mehrere Parameter des Schwingungsverhaltens des Drehschwingungsdämpfers bestimmt und als Eingangsgröße zur Bestimmung der aktuellen Schädigungsrate genutzt. Insbesondere werden der oder die Parameter des Schwingungsverhaltens des Drehschwingungsdämpfers durch die erste Komponente bestimmt und/oder dienen als Eingangsgröße für die dritte Komponente. Bei dem oder den Parametern handelt es sich insbesondere um eine aktuelle Scherrate und/oder maximale Deformation des Drehschwingungsdämpfers.

In einer möglichen Ausgestaltung der vorliegenden Erfindung umfasst das Verfahren den weiteren Schritt:

- Abschätzen einer Restlebensdauer auf Grundlage des aktuellen Schädigungszustands.

Durch die Abschätzung der Restlebensdauer kann die Wartung des Drehschwingungsdämpfers besser geplant werden.

In einer möglichen Ausgestaltung der vorliegenden Erfindung erfolgt die Abschätzung unter Heranziehung einer angenommenen zukünftigen Schädigungsrate.

In einer möglichen Ausgestaltung der vorliegenden Erfindung wird diese auf Grundlage einer mittleren Schädigungsrate in der Vergangenheit und/oder einer maximalen Schädigungsrate bestimmt.

Insbesondere kann in einer ersten Variante eine mittlere Schädigungsrate in der Vergangenheit als zukünftige Schädigungsrate angenommen werden. Gegebenenfalls können bei der Mittelung stärker in der Vergangenheit liegende Zeitabschnitte weniger stark gewichtet werden als näher an der Gegenwart liegende Zeitabschnitte.

In einer zweiten Variante kann eine maximale Schädigungsrate als zukünftige Schädigungsrate angenommen werden. Hierdurch wird die Sicherheit einer verbleibenden Funktionstüchtigkeit des Schwingungsdämpfers bei der Schätzung der Restlebensdauer erhöht. Die maximale Schädigungsrate kann vorgegeben sein und beispielsweise auf theoretischen Annahmen beruhen, und/oder die maximale Schädigungsrate kann auf Grundlage der bisher bestimmten aktuellen Schädigungsraten als bisheriger Maximalwert bestimmt werden. Weiterhin sind auch Mittelwerte zwischen zwei in dieser Weise vorgegebenen und bestimmten Werten denkbar, oder die Auswahl des jeweils größeren Wertes. Alternativ kann die Restlebensdauer für den Worst Case zu Grunde gelegt werden, d.h. die Bestimmung der Restlebensdauer erfolgt unter der Annahme, dass der Schwingungsdämpfer in seinem zukünftigen Betrieb mit der maximalen noch als realistisch einzubeziehenden Belastung beaufschlagt wird.

In einer möglichen Ausgestaltung der vorliegenden Erfindung umfasst das Verfahren den weiteren Schritt:

- Wartung und/oder Austausch des Drehschwingungsdämpfers, wenn die Restlebensdauer kleiner ist als ein Wartungsintervall.

Hierdurch wird ein Ausfall des Drehschwingungsdämpfers vor Ablauf des nächsten Wartungsintervalls verhindert, es sei denn ein vom erfindungsgemässen System angezeigter nötiger Austausch bzw. eine nötige Reparatur wird nicht ausgeführt.

Die vorliegende Erfindung umfasst weiterhin ein System zur Überwachung eines in einem Antriebssystem enthaltenen Drehschwingungsdämpfers, umfassend mindestens eine Steuerung mit:

- einer Erfassungsfunktion zum Bestimmen mindestens eines Betriebs- und/oder Umweltparameters des Antriebssystems und/oder des Drehschwingungsdämpfers;
- einer Bestimmungsfunktion zum Bestimmen einer aktuellen Schädigungsrate anhand des mindestens einen Betriebs- und/oder Umweltparameters;
- einer Schädigungsakkumulationsfunktion zur Integration der aktuellen Schädigungsrate zur Bestimmung eines aktuellen Schädigungszustands des Drehschwingungsdämpfers.

Durch das erfindungsgemäße System ergeben sich die gleichen Vorteile, welche oben im Hinblick auf das Verfahren näher beschrieben wurden. Weiterhin kann das System so ausgestaltet sein, dass es ein Verfahren durchführt, wie es oben beschrieben wurde.

Insbesondere umfasst die Steuerung dabei einen Mikroprozessor und einen nichtflüchtigen Speicher, auf welchem ein Programm abgespeichert ist. Insbesondere ist das erfindungsgemäße Verfahren in einem Programm implementiert, das auf einem Mikroprozessor abläuft. Die oben näher beschriebenen Funktionen, Verfahrensschritte, Modelle und/oder Komponenten werden dabei bevorzugt durch Software-und/oder Hardware-Funktionen der Steuerung implementiert. Die Steuerung steht bevorzugt mit weiteren Steuerungskomponenten in Verbindung und/oder ist in diese integriert. Die Steuerung kann auch auf mehrere physische Komponenten verteilt implementiert werden, gegebenenfalls auch auf mehrere entfernt voneinander angeordnete Komponenten.

Die vorliegende Erfindung umfasst weiterhin ein Antriebssystem mit einem Drehschwingungsdämpfer und einem Überwachungssystem, wie es soeben beschrieben wurde.

In einer möglichen Ausgestaltung der vorliegenden Erfindung ist das Überwachungssystem und insbesondere dessen Steuerung in eine Steuerung des Antriebssystems integriert.

Alternativ oder zusätzlich kann das Überwachungssystem und insbesondere dessen Steuerung zumindest teilweise auf einem Server installiert sein, welcher mit der Steuerung des Antriebssystems kommuniziert.

Die vorliegende Erfindung umfasst weiterhin eine mobile oder stationäre Maschine mit einem einen Drehschwingungsdämpfer enthaltenden Antriebssystem und mit einem Überwachungssystem, wie es oben beschrieben wurde.

Bei einer mobilen Maschine kann das Antriebssystem der Fortbewegung der Maschine dienen, und insbesondere einen Fahrantrieb darstellen. Bei der mobilen Maschine kann es sich beispielsweise um eine Erdbewegungsmaschine wie einen Bagger oder einen Laster handeln, ein schienengebundenes Fahrzeug oder ein Schiff.

Bei einer stationären Maschine kann das Antriebssystem der Energieversorgung dienen. Insbesondere kann es sich bei der stationären Maschine um eine Kombination aus Verbrennungsmotor und Generator handeln, durch welche elektrische Energie erzeugt wird. Beispielsweise kann es sich um ein Notfallaggregat handeln.

In einer möglichen Ausgestaltung der vorliegenden Erfindung ist das Überwachungssystem und insbesondere dessen Steuerung in eine Steuerung der Maschine bzw. der Anlage und/oder des Antriebssystems integriert und/oder zumindest teilweise auf einem Server installiert, welcher mit der Maschine bzw. der Anlage kommuniziert.

Die vorliegende Erfindung wird nun anhand von Ausführungsbeispielen und Figuren näher beschrieben.

Dabei zeigen:

Fig. 1: ein erstes Beispiel für einen Viskosedrehschwingungsdämpfer, für welchen die vorliegende Erfindung einsetzbar ist, in einer Schnittansicht,

Fig. 2: ein zweites Beispiel für einen Elastomerdrehschwingungsdämpfer, für welchen die vorliegende Erfindung einsetzbar ist, in einer Schnittansicht,

Fig. 3: ein drittes Beispiel für einen Blattfederdrehschwingungsdämpfer, für welchen die vorliegende Erfindung einsetzbar ist, in einer Schnittansicht,

Fig. 4: ein Ablaufschema eines Ausführungsbeispiels eines erfindungsgemäßen Verfahrens bzw. eine Darstellung der Funktionen eines Ausführungsbeispiels eines erfindungsgemäßen Systems,

Fig. 5: ein Ausführungsbeispiel eines in einem erfindungsgemäßen Verfahren bzw. einem erfindungsgemäßen System eingesetzten Modells,

Fig. 6: zwei Diagramme, welche eine Lebensdauerberechnung gemäß der gängigen Praxis beschreiben,

Fig.7: zwei Diagramme, welche zum einen den Non-Road Transient Cycle (NRTC) und zum anderen ein zur Auslegung beispielhaft herangezogenes Auslegungsprofil zeigen,

Fig. 8: zwei Diagramme, welche das erfindungsgemäße Prinzip der Schädigungsakkumulation durch Integration der aktuellen Schädigungsrate zeigen und

Fig. 9: zwei Diagramme, welche die Schädigungsakkumulation für NRTC und das in Fig. 7 gezeigte Auslegungsprofil zeigen.

Im Folgenden werden zunächst der Aufbau und die Funktionsweise einiger der im Rahmen der vorliegenden Erfindung einsetzbaren Bauarten von Drehschwingungsdämpfern beschrieben.

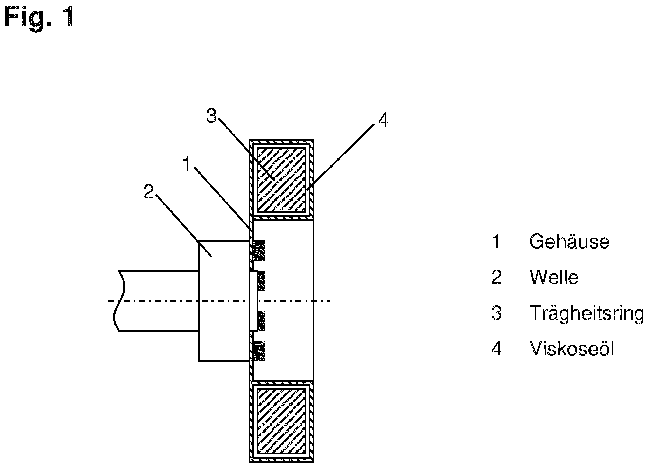

Der Viskosedrehschwingungsdämpfer (siehe. Fig. 1) besteht aus einem Gehäuse (1), das an der zu bedämpfenden Welle (2) angebracht ist. In dem Gehäuse ist ein Trägheitsring (3) - zur Vereinfachung im Folgetext als Ring bezeichnet - derart gelagert, dass er sich frei um die Längsachse drehen kann. Zwischen dem Gehäuse und dem Ring befindet sich ein Spalt mit wohldefinierten Abmessungen, welcher mit einem viskosen Medium, in der Regel Silikonöl, gefüllt ist. Wird die Welle zu Torsionsschwingungen angeregt, ergibt sich aufgrund der Massenträgheit des Rings eine Relativbewegung zwischen Ring und Gehäuse, welches zu einer Scherung des viskosen Mediums im Spalt führt. Aufgrund der Viskosität des Mediums wird zwischen Ring und Gehäuse eine der Scherbewegung entgegengesetzte Schubspannung erzeugt, welche die Relativbewegung zwischen Ring und Gehäuse bedämpft. Die mit der Scherdeformation einhergehende Verlustleistung wird in Form von Wärme über die Oberfläche des Gehäuses abgeführt. Aufgrund des primär viskosen Charakters des Dämpfungsmediums hat ein Viskosedrehschwingungsdämpfer eine verhältnismässig breitbandige Dämpfungswirkung, ohne Ausbildung ausgeprägter Resonanzen. In Hochleistungs-Dieselmotoren wird ein Viskosedrehschwingungsdämpfer aufgrund seiner sehr hohen Dämpfungsraten bevorzugt verwendet.

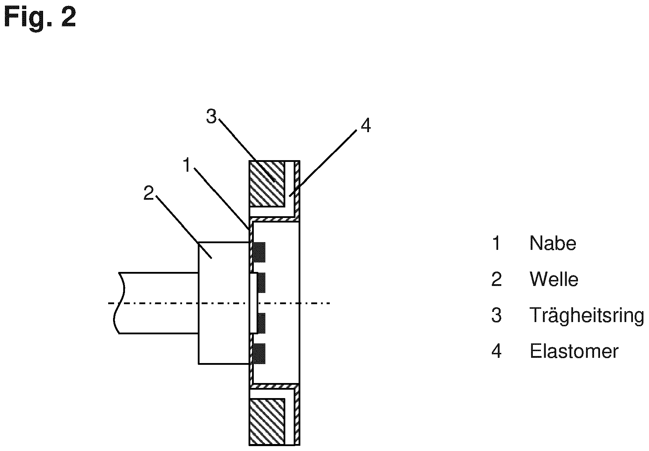

Der Elastomerdrehschwingungsdämpfer (siehe Fig. 2) besteht aus einer Nabe (1), welche an der zu bedämpfenden Welle (2) angebracht ist. Der Trägheitsring (3) ist über eine Elastomerschicht (4) an die Nabe angekoppelt. Die Anbindung erfolgt in der Regel durch Vulkanisation. Trägheitsring und Elastomerschicht stellen einen Einmassentorsionsschwinger dar. Dieser wird gezielt auf die zu unterdrückende Resonanzfrequenz des zu bedämpfenden Systems abgestimmt und wirkt somit als gedämpfter Torsionsschwingungstilger. Aufgrund der Relativbewegung zwischen Ring und Nabe wird in dem Elastomer aufgrund seiner viskosen Eigenschaft Verlustwärme freigesetzt, welche über Nabe und Ring an die Umgebung abgeführt wird. Elastomerschwingungsdämpfer kommen oftmals in PKW- und Industriemotoren mit niedriger Leistungsdichte zum Einsatz. Eine Sonderform stellt dabei die Kombination aus Elastomerdrehschwingungsdämpfer und Riemenscheibe dar.

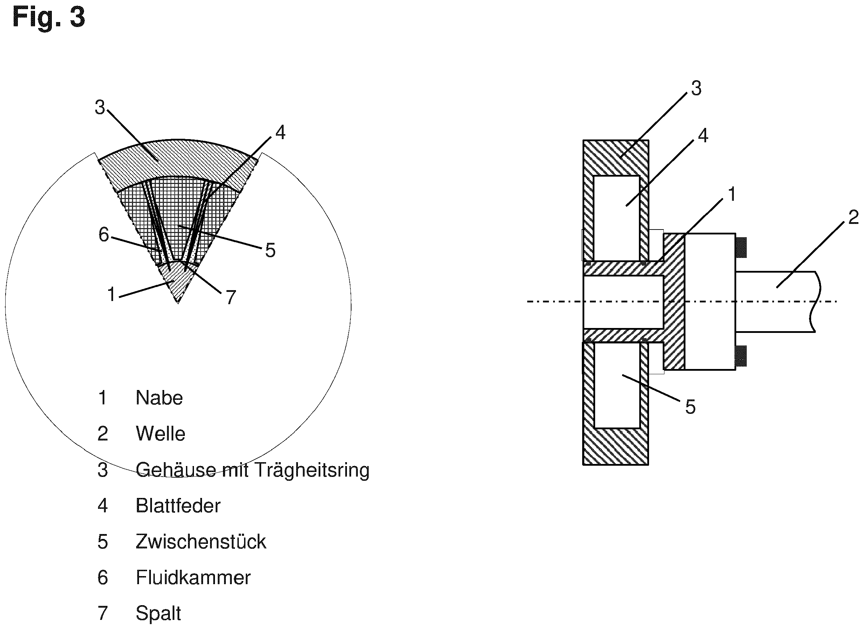

Der Blattfederdrehschwingungsdämpfer (siehe Fig. 3) besteht aus einer Nabe (1), welche an der zu bedämpfenden Welle (2) angebracht ist. Das Gehäuse mit Trägheitsring (3) ist über mehrere radial angeordnete Blattfedern bzw. Blattfederpakete (4) an die Nabe angekoppelt. Zwischen den Blattfederpaketen sind Zwischenstücke (5) derart angeordnet, dass sich zwischen Blattfederpaket und Zwischenstück ölgefüllte Fluidkammern (6) befinden. Bei einer Relativverdrehung zwischen Trägheitsring und Nabe ändern sich die Volumina der Fluidkammern wechselseitig, wobei der Volumenausgleich zweier benachbarter Kammern über den Spalt (7) zwischen Nabe und Zwischenstück bewerkstelligt wird. In Abhängigkeit der Spaltdicke können sehr hohe Fliessgeschwindigkeiten des Öls auftreten, welche in Kombination mit der Ölviskosität zu einer sehr hohen Dämpfung der Relativbewegung führt. Ist der Dämpfer über eine Ölversorgung an einen Ölkreislauf angeschlossen, wird die dissipierte Wärme über diesen abgeführt. Bei der geschlossenen Ausführung ohne externe Ölversorgung, die wesentlich einfacher umzusetzen ist, muss die Wärme über das Gehäuse abgeführt werden.

Ein wesentlicher Vorteil des Blattfederdrehschwingungsdämpfers ist die Möglichkeit, Massenträgheit, Federsteifigkeit und Dämpfungsrate getrennt voneinander konstruktiv einzustellen. Dies ermöglicht eine optimale Abstimmung auf das zu bedämpfende System. Der Blattfederdrehschwingungsdämpfer ist auch unter dem Begriff Ölverdrängungsdämpfer oder Geislinger Dämpfer bekannt.

Allen oben beschriebenen Bauarten von Drehschwingungsdämpfern ist gemein, dass sie sich eines viskosen bzw. viskoelastischen Stoffes zur Bedämpfung von Drehschwingungen bedienen. Da diese Stoffe naturgemäss einem Alterungsprozess unterliegen, ist ihre Standzeit entsprechend begrenzt. Aufgrund der starken Temperaturabhängigkeit des Alterungsprozesses ist die Standzeit zudem in erheblichem Masse vom Lastprofil abhängig. Lastprofile, bei denen Betriebszustände mit geringer Dissipationsleistung und damit einem geringen Wärmeeintrag in das viskose Medium bzw. in den viskoelastischen Werkstoff dominieren, erlauben prinzipiell längere Standzeiten als solche mit hohem Wärmeeintrag.

Um den Wartungsaufwand von Maschinen (stellvertretend für mobile Einsätze) und Anlagen (stellvertretend für stationäre Einsätze) so gering wie möglich zu halten, ist man in der Regel bestrebt, die Drehschwingungsdämpfer für die Gesamtbetriebsdauer der Maschine bzw. der Anlage auszulegen. Ist dies aufgrund des prognostizierten Verschleisses des viskosen bzw. viskoelastischen Stoffes nicht möglich, muss dessen Erneuerung oder gar der Austausch des Drehschwingungsdämpfers im Rahmen des Wartungsplans vorgesehen werden.

Nachdem sich letzterer in der Regel an der Betriebsdauer der Anlage bzw. Maschine oder den zurückgelegten Kilometern des Fahrzeugs orientiert, musste gemäß dem Stand der Technik bei der Dimensionierung des Drehschwingungsdämpfers sowie ggf. bei der Festlegung des Wartungs- bzw. Austauschintervalls von dem für den Drehschwingungsdämpfer bzw. den dämpfungsbehafteten Stoff ungünstigsten Szenario ausgegangen werden. Bei Maschinen und Anlagen deren Verfügbarkeit als hochwichtig erachtet wird, musste bei den Auslegungen eines Drehschwingungsdämpfers das Lastprofil mit dem höchsten und längsten Wärmeeintrag bei gleichzeitig maximal zulässiger Umgebungstemperatur sowie den schlechtesten Wärmeabfuhrbedingungen zugrunde gelegt werden. Da diese Kombination jedoch nur in den seltensten Fällen vorliegen wird, führte diese Herangehensweise zwangsläufig zu einer Überdimensionierung der Drehschwingungsdämpfer bzw. zu einem verfrühten Austausch des dämpfungsbehafteten Stoffes.

Bei dem Antriebssystem kann es sich insbesondere um einen Verbrennungsmotor, eine E-Maschine oder eine hydraulische Verdrängereinheit handeln oder eine Kombination handeln, welche mindestens eine derartige Antriebskomponente enthält.

Im Folgenden soll als Auführungsbeispiel auf die spezifische Situation des an der Kurbelwelle eines Verbrennungsmotors angebrachten Drehschwingungsdämpfers näher eingegangen werden.

Im Zuge der Marktanforderungen an Verbrennungsmotoren, werden bei der Weiterentwicklung unter anderem sowohl die Leistungsdichte als auch die Verbrennungsspitzendrücke stetig erhöht. Dadurch vergrössert sich die Dämpferverlustleistung zum Teil erheblich für jede neue Motorengeneration. Zusätzlich wird oftmals eine höhere Motorraumtemperatur akzeptiert, um die aufzubringende Kühlleistung zu verringern. Infolgedessen kann beobachtet werden, dass die Grösse der Drehschwingungsdämpfer an der Kurbelwelle aufgrund der steigenden Dissipationsraten und Motorraumtemperaturen stetig zunimmt, um einen ausreichenden Wärmeabtransport zu gewährleisten. Die Torsionsdynamik setzt jedoch der Dämpfergrösse oftmals Grenzen, da die damit einhergehende Erhöhung des Massenträgheitsmoments kritische Resonanzfrequenzen in den Anwendungsdrehzahlbereich verlagern kann. Dieser Situation kann grundsätzlich durch eine Absenkung der Motorraumtemperatur begegnet werden, was jedoch auf Kosten des Bauraums sowie des Gesamtwirkungsgrads der Maschine oder Anlage geht. Oftmals bleibt als Ausweg nur der Wechsel zu einer anderen Technologie. So werden einfache Elastomerdämpfer bei Erreichen des Belastbarkeitslimits bei maximal möglicher Baugrösse durch Viskosedrehschwingungsdämpfer ersetzt. Diese wiederum müssen Blattfederdämpfern weichen, wenn der Bauraum oder die thermischen Limite überschritten werden. Sowohl die Vergrösserung als auch der Technologiewechsel gehen mit nicht unerheblichen Mehrkosten einher.

Alternativ kann dem Problem begegnet werden, indem eine kürzere Lebensdauer des Dämpfers akzeptiert wird, was allerdings das Vorsehen eines generellen Austauschs vor Ablauf der Motorlebensdauer nach sich zieht, oder bei Dämpfern grösserer Bauart den Austausch des (Viskose-)öls. Zwar zeichnet sich diese Lösung entwicklungsseitig durch den geringsten Aufwand aus, jedoch erhöhen sich seitens des Kundendienstes sowohl Aufwand als auch Kosten. Zudem stellt der generelle vorzeitige Austausch des Dämpfers eine unbefriedigende Lösung dar, zumal dieser nur stattfindet, um eher selten vorliegende ungünstige Betriebsbedingungen abzudecken. Somit würden in erheblichem Masse noch funktionstüchtige Dämpfer ausgetauscht.

Diese Problematik wird nunmehr durch die vorliegende Erfindung adressiert, indem ein Verfahren und ein System zur prädiktiven Verschleisserkennung von Drehschwingungsdämpfern zur Verfügung gestellt wird. Ein Ausführungsbeispiel eines solchen Verfahrens und Systems wird im Folgenden näher beschrieben.

Modellbasiertes System zur prädiktiven Wartung

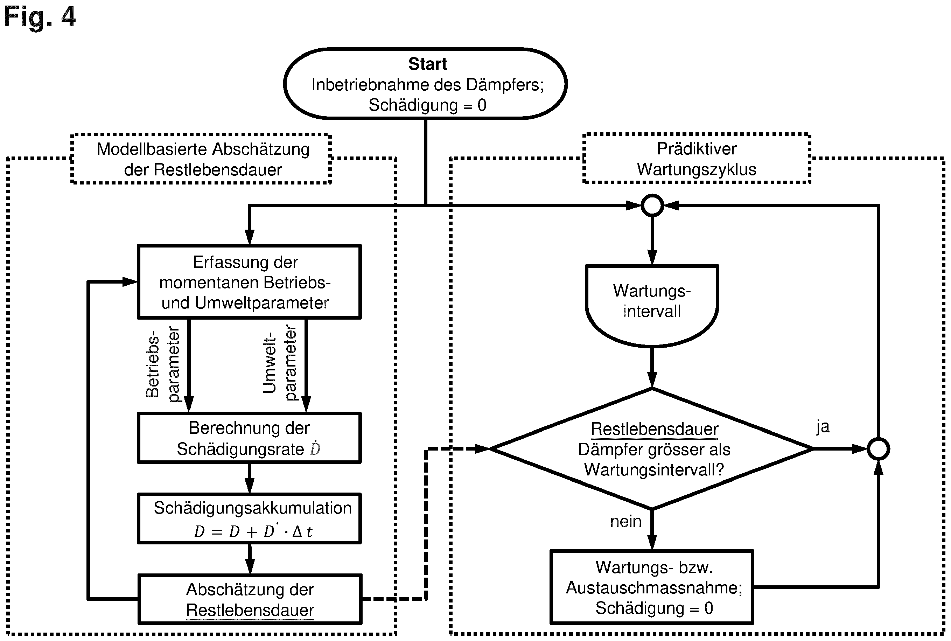

Bei dem Ausführungsbeispiel der Erfindung handelt es sich um ein modellbasiertes System zur prädiktiven Verschleisserkennung von Drehschwingungsdämpfern. Die Bestandteile und die Funktionsweise des Systems sind in Fig. 4 in Form eines Ablaufdiagramms dargestellt.

Kern des Systems ist dabei die modellbasierte Abschätzung der Restlebensdauer, siehe Fig. 4 (links). Basierend auf den relevanten Betriebsparametern wie der Drehzahl und dem Drehmoment sowie Umweltparametern wie bspw. der Umgebungstemperatur lässt sich die momentane Schädigungsrate D des dämpfungsbehafteten Stoffes berechnen. Die Ermittlung der akkumulierten Schädigung seit Inbetriebnahme erfolgt durch Integration der Schädigungsrate über die Betriebsdauer. Typischerweise erfolgt dies, indem die Schädigungsrate in einer Schleife der Zeitschrittweite $\Delta t$ bestimmt wird. Die Integration erfolgt zu jedem Zeitschritt, indem die akkumulierte Schädigung D um das Schädigungsinkrement $\dot{D} \cdot \Delta t$ erhöht wird. Die zu erwartende Restlebensdauer des Dämpfers kann basierend auf der mittleren Schädigungsrate $\overline{\dot{D}}$ der Vergangenheit geschätzt werden,

$$t_{Rest} = \frac{1 - D}{\overline{\dot{D}}}.$$

Die Information der prognostizierten (minimalen) Restlebensdauer des Dämpfers wird dem Wartungssystem der Maschine bzw. Anlage zur Verfügung gestellt, siehe Fig. 4 (rechts). Wird während einer Wartungsmassnahme festgestellt, dass die geschätzte Restlebensdauer geringer als das Wartungsintervall ist, und somit nicht ausreicht, um die nächste reguläre Wartungsmassnahme zu erreichen, muss der Dämpfer ausgetauscht werden, bzw. dessen viskoses Medium erneuert werden (präventiver Aspekt).

Die Schätzung der zu erwartenden Restlebensdauer basiert auf der Annahme, dass sich die zukünftigen Betriebsbedingungen nicht wesentlich von denen in der Vergangenheit unterscheiden. Für den Fall einer nennenswerten Verschlechterung der Betriebsbedingungen ist diese Schätzung somit nicht konservativ. Es droht somit trotz positiver Prognose ein Ausfall des Dämpfers vor Erreichen der nächsten regulären Wartungsmassnahme. Ausgehend von einer entsprechenden Warnmeldung muss dem drohenden Ausfall nun durch eine irreguläre Wartungsmassnahme begegnet werden, was mit zum Teil erheblichen Kosten und zusätzlichem Stillstand der Maschine oder Anlage verbunden ist. Unter Umständen ist auch denkbar, die verbleibende Restlebensdauer durch Leistungsdrosselung oder Reduktion der Motorraumtemperatur so weit zu verlängern, dass der nächste reguläre Wartungstermin schadenfrei erreicht wird.

Die Problematik der nichtkonservativen Schätzung der Restlebensdauer lässt sich vermeiden, indem deren Minimalwert basierend auf der unter den zulässigen Betriebsbedingungen maximal möglichen Verschleissrate $\bar{\dot{D}}_{max}$ bestimmt wird,

$$t_{Rest,min} = \frac{1 - D}{\bar{\dot{D}}_{max}}.$$

Von dieser Option sollte insbesondere bei Maschinen oder Anlagen mit hohen Anforderungen an die Verfügbarkeit Gebrauch gemacht werden.

Modell zur Berechnung der Schädigungsrate

Grundsätzlich bestehen zwei Möglichkeiten zur Bestimmung der Schädigungsrate. Beim physikalisch-chemischen Modell wird die Schädigungsrate basierend auf naturwissenschaftlichen Gesetzmässigkeiten hergeleitet. Dies kann unter Kenntnis der ursächlichen physikalisch-chemischen Gesetzmässigkeiten geschehen oder auf rein phänomenologische Weise, etwa weil die Kenntnisse gar nicht vorhanden sind oder für die Handhabung in der Anwendung zu komplex sind.

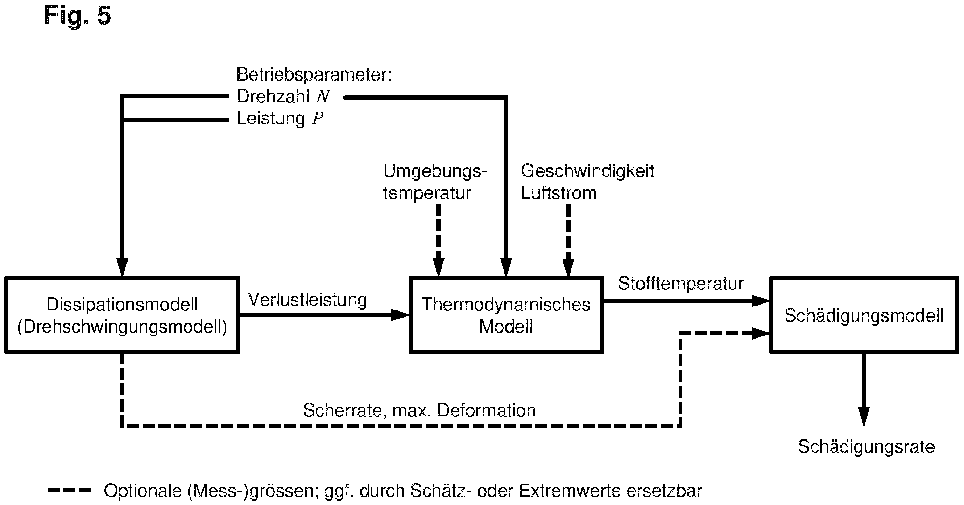

Im Ausführungsbeispiel wird eine Kombination beider Modelltypen verwendet, d.h. ein sogenanntes Gray-Box- Modell. Es lässt sich in drei Submodelle unterteilen, siehe Fig. 5.

Als Dissipationsmodell fungiert ein Drehschwingungsmodell, welches aus den relevanten Betriebsparametern (Drehzahl und Drehmoment bzw. Leistung) die thermische Verlustleistung des Dämpfers berechnet. Neben dem Schwingungsdämpfer selbst umfasst das Modell dabei das gesamte zu bedämpfende System, also beispielsweise den Kurbeltrieb des Verbrennungsmotors, das Nockenwellensystem oder das gesamte Antriebssystem, inkl. Verbrennungsmotor, in vereinfachter Form. Entscheidend für die Güte des Dissipationsmodells ist unter anderem die möglichst genaue Kenntnis des viskosen bzw. viskoelastischen Verhaltens des Stoffes. Hier gilt zu berücksichtigen, dass dieses im Allgemeinen sowohl eine temperatur- als auch eine frequenzabhängige Charakteristik aufweist. Darüber hinaus ist die Charakteristik auch noch abhängig von dem Verschleisszustand des Stoffes selbst. Das Dissipationsmodell basiert sowohl auf grundlegenden Prinzipien der Mechanik, als auch auf einer phänomenologischen Beschreibung der Dämpfercharakteristik. Es kann ggf. aber auch durch ein Kennfeld beschrieben werden.

Aufgabe des thermodynamischen Modells ist die Berechnung der Temperatur des dämpfungsbehafteten Stoffes bzw. des gesamten Drehschwingungsdämpfers. Neben der Verlustleistung aus dem Dissipationsmodell ist der Wärmeübergang zur Umgebungsluft an der Oberfläche des Dämpfers massgeblich, welcher wesentlich von den lokalen Strömungsverhältnissen abhängt. Eine vollständige strömungsmechanische Modellierung des Wärmeübergangs ist mit der heute zur Verfügung stehenden Simulationstechnik zwar möglich, geht jedoch mit einem für die Anwendung nicht zweckmässigen extrem hohen Rechenaufwand überein. Aus diesem Grund kommt sinnvollerweise ein vereinfachtes phänomenologisches Wärmeübergangsmodell in Form eines mehrdimensionalen Kennfelds zur Anwendung. Wesentliche Parameter sind hier die Drehzahl und die Temperatur der Umgebungsluft. Für letztere kann entweder im konservativen Sinn der maximal zulässige Wert angenommen werden oder aber ein direkt gemessener Wert. Auch ist es möglich, die Temperatur der Umgebungsluft indirekt anhand eines Ersatzmesswerts zu schätzen. Des Weiteren hängt der Wärmeübergangskoeffizient noch von der Anströmgeschwindigkeit der Umgebungsluft ab. Bei Fahrzeuganwendungen lässt sich diese anhand der momentanen Fahrgeschwindigkeit abschätzen.

Das Schädigungsmodell schliesslich dient der Ermittlung der momentanen Schädigungsrate. In einer einfachen Form besteht es aus der entsprechend parametrierten Arrhenius-Gleichung mit der Stofftemperatur als Eingangsgrösse. Bekanntermassen beschreibt die Arrhenius-Gleichung eine gut angenäherte quantitative Temperaturabhängigkeit bei vielen chemischen Prozessen ohne jedoch eine Erklärung für die Zusammenhänge zu beinhalten. Die Arrhenius-Gleichung beschreibt dabei eine nicht-lineare Temperaturabhängigkeit der Schädigungsrate.

Optional können im Schädigungsmodell weitere Grössen aus dem Dissipationsmodell verwendet werden, wie etwa die Scherrate oder die maximale Deformation.

In anderen Bereichen der Technik basieren Systeme der prädiktiven Wartung oftmals auf heuristischen Modellen. Der Vorteil dieser Modelle ist, dass entweder keine oder nur eine eingeschränkte Kenntnis der oftmals sehr komplexen physikalischen Zusammenhänge vorausgesetzt wird. Vielmehr basieren diese Modelle auf der Analyse statistischer Zusammenhänge zwischen den Betriebs- und Umweltparametern einerseits und dem Ausfallverhalten der betreffenden Komponente andererseits. Voraussetzung hierfür ist das Vorhandensein einer hinreichend grossen Datenbasis, aus der das heuristische Modell mittels geeigneter statistischer Methoden abgeleitet werden kann. Grundsätzlich ist die Anwendung heuristischer Modelle für die modellbasierte prädiktive Festlegung von Wartungsterminen von Drehschwingungsdämpfern durchaus denkbar. Limitierender Faktor ist jedoch die Generierung einer ausreichenden Datenbasis. Um die für das heuristische Modell benötigten statistischen Korrelationen herzustellen, werden in grösserer Anzahl Informationen zum Verschleisszustand des dämpfungsbehafteten Stoffs in Dämpfern aus dem Feld benötigt. Während bei Blattfederdämpfern und grösseren Viskosedrehschwingunsdämpfern die Möglichkeit der Probenentnahme besteht, ist dies für solche von kleinerer Baugrösse bzw. für Elastomerdämpfer nicht möglich. Eine statistische Korrelation mit Dämpferversagen hingegen würde erfordern, dass eine nennenswerte Anzahl an Dämpferausfällen existiert. Nachdem ein solcher jedoch in der Regel einen Totalausfall aufgrund eines (Kurbel-)Wellenbruchs darstellt, wird die Datenbasis eher gering ausfallen.

Erfindungsgemäß wird daher bevorzugt ein physikalisch-chemisches Modell eingesetzt.

Implementierung

Das System zur Abschätzung der Restlebensdauer kann in das Steuergerät der Maschine oder der Anlage integriert werden, was eine kontinuierliche Überwachung des Verschleisszustands des viskosen Mediums bzw. Elastomers erlaubt. Bevorzugt umfasst die Steuerung hierfür mindestens einen Mikrocontroller und einen nicht-flüchtigen Speicher, in welchem ein Programm abgelegt ist, welches das erfindungsgemäße Verfahren und die oben beschriebenen Komponenten des erfindungsgemäßen Systems implementiert, wenn es auf dem Mikrocontroller abläuft. Die Steuerung steht bevorzugt mit Sensoren in Verbindung, über welche Betriebs- und/oder Umweltparameter erfasst werden. Die Steuerung dient bevorzugt gleichzeitig der Ansteuerung des Antriebssystems und/oder steht mit einer solchen Antriebssteuerung in Verbindung.

Zur Vereinfachung der Implementierung wird bevorzugt zumindest das Schädigungsmodell in Form eines mehrdimensionalen Kennfelds hinterlegt. Akkumulierte Schädigung und zu erwartende bzw. minimale Restlebensdauer können intern gespeichert werden und stehen für das Auslesen über eine Serviceschnittstelle bereit.

Alternativ können diese fortlaufend extern, z.B. in einer Cloud gespeichert werden, was bei bestehender informationstechnischer Anbindung an ein Datennetz, z.B. das Internet, einen jederzeitigen Zugriff auf diese Daten ermöglicht, und das ohne Abschaltung der Maschine bzw. der Anlage und ohne einen menschlichen Eingriff an der Maschine bzw. an der Anlage.

Alternativ ist es auch möglich, die Berechnung des Verschleisszustands und der Restlebensdauer ausserhalb der Maschine oder Anlage auf einem Server z.B. anhand übermittelter Lastkollektivkenngrössen durchzuführen.

Somit können der Verschleisszustand und die zu erwartende bzw. minimale Restlebensdauer dem Kundendienst zur Verfügung gestellt werden, um der Gefahr eines Ausfalls des Drehschwingungsdämpfers präventiv begegnen zu können. Selbstverständlich ist auch eine Verwendung dieser Information in der überwachten Maschine bzw. Anlage möglich. Beispielsweise kann die Belastung des Drehschwingungsdämpfers bei Überschreiten eines kritischen Verschleisszustands des Stoffes durch Leistungsdrosselung reduziert werden, um einen Schaden an der Maschine oder Anlage bzw. deren Totalausfall infolge der Funktionsverringerung oder eines Versagens des Stoffes zu verhindern bzw. entsprechend zu verzögern.

Anwendungsbeispiel Viskosedrehschwingungsdämpfer eines Verbrennungsmotors

Im Folgenden wird die Wirkungsweise der Erfindung am Beispiel eines Viskosedrehschwingungsdämpfers an der Kurbelwelle eines Verbrennungsmotors erläutert.

Vorab soll die gängige Praxis der Auslegung skizziert werden, welche lediglich auf der maximal zulässigen Motorraumtemperatur $T_{Umax}$ sowie dem anwendungsspezifischen Lastfaktor $\kappa$ basiert. Für ein gegebenes Lastprofil $P(t)$ der Dauer $t_L$ ergibt sich dieser zu

$$\kappa = \frac{1}{p_{max} \cdot t_L} \int_0^{t_L} P(t) dt$$

Bezugsgrösse für die Lebensdauerberechnung bei Viskosedrehschwingungsdämpfern ist in der Regel die Oberflächentemperatur, da diese relativ einfach zu erfassen ist, und gut mit der Silikonöltemperatur im Inneren des Dämpfers korreliert.

Für die konservative Auslegung des Dämpfers wird das für den Dämpfer denkbar ungünstigste Lastprofil unterstellt, welches lediglich zwei Betriebszustände beinhaltet und zwar (i) die Volllast "V" bei derjenigen Drehzahl, bei der sich die maximale Temperaturdifferenz $\Delta T_V$ ergibt, und (ii) der obere Leerlaufbetriebspunkt "L" bei hoher Drehzahl ohne äussere Last, welcher typischerweise bei hydrostatischen Antrieben im Bereitschaftszustand gefahren wird. Die Gewichtung der beiden Betriebszustände wird entsprechend dem anwendungsspezifischen Lastfaktor $\kappa$ gewählt. Für beide Betriebszu-

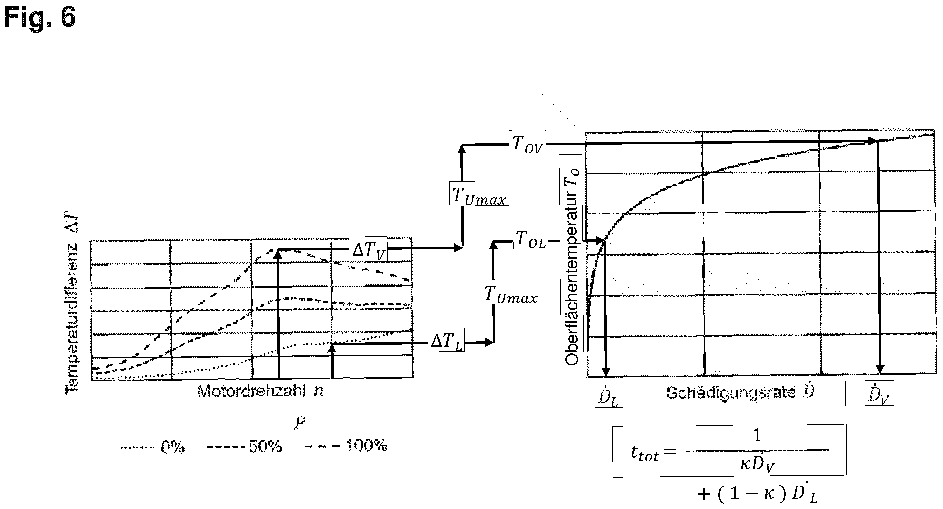

stände lassen sich anhand des Dissipations- und des thermodynamischen Modells die Temperaturdifferenzen $\Delta T_V$ und $\Delta T_L$ berechnen, siehe Fig. 6 (links). Unter konservativer Annahme der maximalen Motorraumtemperatur $T_{Umax}$ erhält man die entsprechenden Oberflächentemperaturen $T_{OV}$ und $T_{OL}$ beider Betriebszustände, wie in Fig. 6 im Übergang zwischen dem linken und dem rechten Diagramm dargestellt. Aus Versuchen sei das Schädigungsmodell in Form einer nichtlinearen Funktion der Schädigungsrate D in Abhängigkeit der Oberflächentemperatur $T_O$ bekannt, siehe Fig. 6 (rechts). Somit erhält man die Schädigungsrate für den Vollastbetriebspunkt $\dot{D}_V$ sowie für den Leerlaufbetriebspunkt $\dot{D}_L$. Unter Hinzunahme des Lastfaktors $\kappa$ ergibt sich die minimale Dämpferlebensdauer zu

$$t_{tot} = \frac{1}{\kappa \dot{D}_V + (1-\kappa)\dot{D}_L} \ .$$

In der Regel wird beabsichtigt, den Dämpfer für die Gesamtlebensdauer des Motors auszulegen. Falls jedoch die errechnete minimale Dämpferlebensdauer die Motorlebensdauer unterschreitet, erfordert die konservative Auslegungsphilosophie das generelle Vorsehen eines vorzeitigen Dämpferaustausches, auf jeden Fall vor Ablauf der Motorlebensdauer, was entsprechende hohe Aufwände und Kosten impliziert. Alternativ kann ein grösserer Dämpfer vorgesehen werden, was jedoch mit erhöhten Kosten einhergeht und bauraumtechnisch nicht immer umsetzbar ist. Zudem setzt die Torsionsdynamik der Dämpfergrösse oftmals Grenzen, da eine Erhöhung des Massenträgheitsmoments kritische Resonanzfrequenzen in den Anwendungsdrehzahlbereich verlagern kann.

Die hier skizzierte gängige Auslegungspraxis ist insbesondere nicht zufriedenstellend, da für die überwiegende Zahl an Maschinen die in der Auslegung unterstellte Kombination der ungünstigsten Betriebsbedingungen selten über der gesamten Betriebsdauer vorliegt. Ein vorzeitiger Austausch oder die Wahl eines grösseren Dämpfers ist für die überwiegende Mehrheit der Maschinen womöglich gar nicht notwendig.

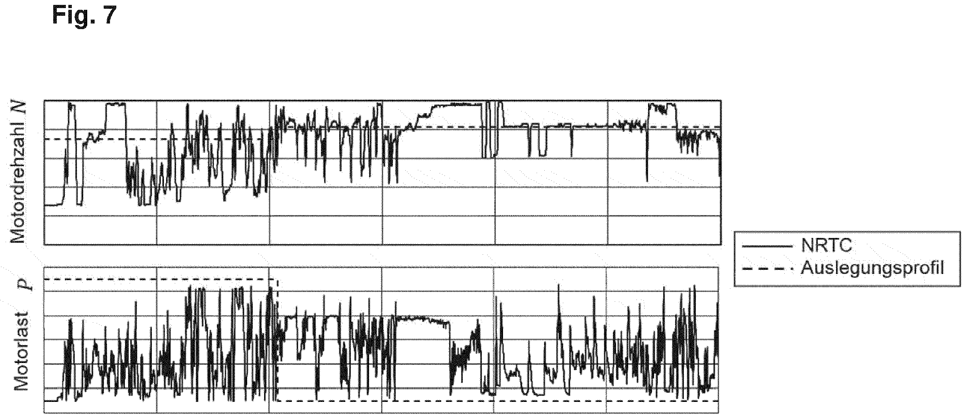

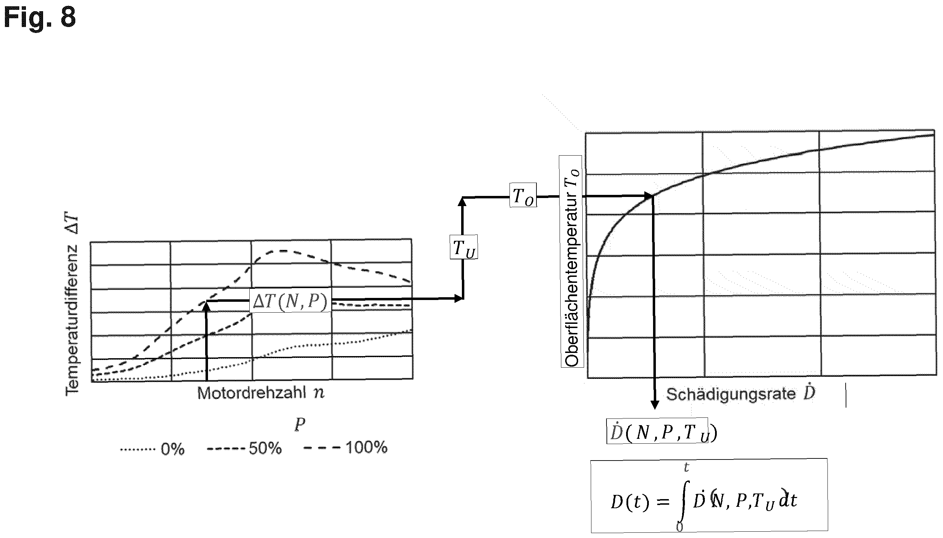

Zur fortführenden Erläuterung der Wirkungsweise der Erfindung sei angenommen, dass die nach der gängigen konservativen Auslegungsstrategie berechnete Dämpferlebensdauer für einen angenommenen Lastfaktor von 33% lediglich 40% der Motorlebensdauer beträgt. In der Praxis würde dies einen zweimaligen Austausch des Schwingungsdämpfers während der Motorlebensdauer erfordern. Exemplarisch sei angenommen, dass der Viskosedrehschwingungsdämpfer in einem Antriebssystem eingesetzt wird, welches den NRTC-Testzyklus (NonRoad Transient Cycle) abfährt. Der NRTC weist ebenfalls den der Auslegung zugrunde gelegten Lastfaktor $\kappa$ von 33% auf, d.h. in dem konstruierten Beispiel stimmt bezüglich des Lastfaktors $\kappa$ die Auslegung exakt mit dem späteren Einsatz überein. In Fig. 7 sind sowohl der Zeitverlauf des NRTC als auch das der Auslegung zugrundeliegende Lastprofil dargestellt. In dem Ausführungsbeispiel der erfindungsgemässen modellbasierten prädiktiven Zustandsüberwachung kann die momentane Schädigungsrate D fortdauernd in Abhängigkeit der vorliegenden Motordrehzahl N, der Leistung P sowie ggf. der Motorraumtemperatur Tu berechnet werden, siehe Fig. 8. Die Schädigung D(t) zum Zeitpunkt t ergibt sich durch Integration der Schädigungsrate $\dot{D}$ über die gesamte bisherige Betriebsdauer des Dämpfers:

$$D(t) = \int_0^t \dot{D}(N, P, T_U)\,dt \ .$$

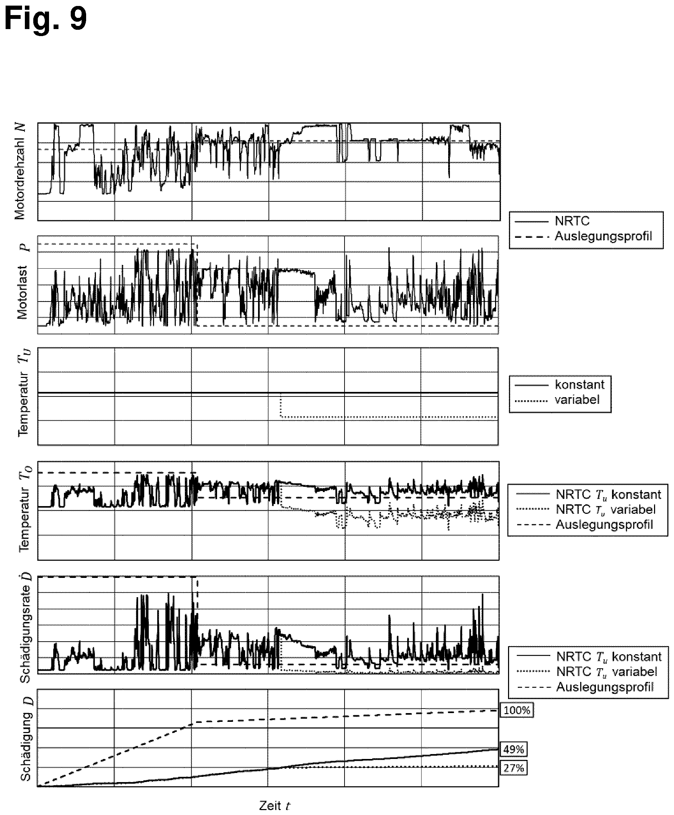

Für die Motorraumtemperatur $T_U$ werden im Weiteren zwei Szenarien betrachtet, siehe Fig. 9 (c). Im Szenario I wird die Maximaltemperatur über die gesamte Zyklusdauer angenommen (durchgezogene Linie) und im Szenario II wird in der ersten Hälfte des Zyklus ebenso die Maximaltemperatur angenommen und in der zweiten Hälfte ein Abfall der Temperatur um 20°C (gepunktete Linie). Für den als real angenommenen Belastungsfall NRTC ergeben sich somit zwei verschiedene Verläufe der Oberflächentemperatur $T_O$ in Diagramm (d). Zusätzlich ist der der Auslegung zugrunde gelegte Verlauf der Oberflächentemperatur $T_O$ ebenfalls dargestellt (gestrichelte Linie). Entsprechend unterscheidet sich der Verlauf der Schädigungsrate $\dot{D}$ im Diagramm (e) für die drei Verläufe der Oberflächentemperatur. Bemerkenswert ist hier, dass die Schädigungsrate im NRTC für beide Temperaturszenarien zu keinem Zeitpunkt den Maximalwert des Auslegungsprofils erreicht. In Diagramm (f) schliesslich ist der Verlauf der Schädigung für die drei betrachteten Fälle dargestellt. Setzt man das Auslegungsprofil als Referenz und definiert hierfür einen Schädigungswert von 100% für das einmalige Durchlaufen des Auslegungs-Zyklus, so ergibt sich für den NRTC bei Vorliegen einer konstanten Motorraumtemperatur (Szenario I) ein Schädigungswert von 49%. Dies bedeutet, dass sich die Nutzungsdauer des Dämpfers unter Anwendung der erfindungsgemässen modellbasierten prädiktiven Verschleissüberwachung in etwa verdoppeln lässt, ohne dass eine Erfassung der Motorraumtemperatur notwendig ist. Dementsprechend ist lediglich ein einmaliger Austausch des Schwingungsdämpfers vor Ende der Motorlebensdauer notwendig. Die Auslegung würde derer zwei erfordern. Unter zusätzlicher Berücksichtigung der im Beispiel als real angenommenen Motorraumtemperatur fällt der durch den NRTC verursachte Schädigungswert auf 27% im Vergleich zum Auslegungsszenario. Dies entspricht etwa einer Verdreifachung der Nutzungsdauer im Vergleich zum Auslegungsszenario. In diesem Fall kann auf jeglichen Austausch des Schwingungsdämpfers verzichtet werden.

Weitere Aspekte und alternative Ausgestaltungen

Die grundlegende Aufgabe der Erfindung besteht darin, die ordnungsgemässe Funktion von dämpfungsbehafteten Stoffen in Drehschwingungsdämpfern über die gesamte Lebensdauer der Maschine bzw. der Anlage zu gewährleisten.

Kern der Erfindung ist die Anwendung des Prinzips der modellbasierten prädiktiven Zustandsüberwachung auf dämpfungsbehaftete Stoffe in Drehschwingungsdämpfern. Für Blattfederdrehschwingungsdämpfer lässt sich das Wechselintervall des dämpfungsbehafteten Mediums von dem erfassten individuellen Lastkollektiv und ggf. des Verlaufs der Umgebungstemperatur der Maschine bzw. Anlage abhängig machen. Für Elastomerdämpfer sowie Viskosedrehschwingungsdämpfer schliesst die erfindungsgemässe prädiktive Überwachung des Verschleisszustands des dämpfungsbehafteten Werkstoffes die Sicherheitslücke, die vielfach das Abrücken von der gängigen Praxis der Auslegung auf Lebensdauer, verhindert hat. Selbst für eine konservative Auslegung kann anstelle der gängigen Auslegungspraxis, welche die während der gesamten Nutzungsdauer anhaltenden ungünstigsten Einsatzbedingung abdeckt (vgl. 3.1), eine Auslegung anhand von repräsentativen Lastzyklen getroffen werden, die sich stärker an der Realität des späteren Einsatzes orientieren.

Auf diese Weise kann unter technisch fundierter Begründung mit Sicherheit in verschiedenen Maschinen und Anlagen die Baugrösse der darin enthaltenen Schwingungsdämpfer reduziert werden. Für ein bestimmtes Maschinen- oder Anlagen-Portfolio erhöht sich gleichermassen das Potenzial zur Verwendung von Gleichteilen.

Diese Einsparungen mit weiteren Folgevorteilen fallen nochmals besonders deutlich aus, sofern in Kauf genommen wird, dass in wenigen Einzelfällen, d.h. bei gleichzeitigem Auftreten von besonders knappen Auslegungen und besonders starken Belastungen dennoch ein Austausch eines Schwingungsdämpfers erforderlich wird. Im Falle von Anwendungen mit ungünstigen Randbedingungen kann der ansonsten nicht vermeidbare generelle Austausch des Dämpfers vor Erreichen des Endes der Motorlebensdauer auf ein Minimum reduziert werden. Sowohl Reduktion der Baugrösse, Erhöhung des Gleichteilepotenzials, als auch Vermeidung des vorzeitigen Dämpferaustauschs stellen ein Kosteneinsparpotenzial dar. Die mit dem Prinzip der Zustandsüberwachung einhergehende Erhöhung der Zuverlässigkeit ist insbesondere für Anwendungen mit erhöhter Anforderung an Verfügbarkeit, wie z.B. Marine, Schienenverkehr oder Notstromaggregate, von nicht vernachlässigbarer Bedeutung.

Im Gegensatz zum Stand der Technik, d.h. zu den bekannten bzw. üblichen Überwachungssystemen, kommt die Erfindung mit wenig oder keinerlei zusätzlicher Sensorik aus. Zudem erlaubt der modellbasierte Ansatz die frühzeitige Indikation eines kritischen Medienverschleisses, sodass erforderliche Massnahmen wie Austausch oder Reparatur im Rahmen des regulären Kundendienstes durchgeführt werden können. Sieht die Wartungsstrategie vor, dass nach Erkennen eines bestimmten Verschleisszustands der Fortbetrieb durch eine Leistungsdrosselung unter abgeschwächter weiterer Alterung aufrecht erhalten soll, um einen ausserplanmässigen Kundendienst zu vermeiden, bietet das erfindungsgemässe System einen grossen Vorteil. Das erfindungsgemässe System erkennt wesentlich früher, dass die Erreichung des nächsten planmässigen Kundendienstes gefährdet ist, wodurch eine Leistungsdrosselung frühzeitiger eingeleitet werden kann; die allerdings in einer wesentlich geringeren Ausprägung und daher für den Fortbetrieb weniger einschränkend ist.

Bei der einfachsten Ausführungsvariante des erfindungsgemässen modellbasierten Systems zur prädiktiven Festlegung von Wartungsterminen dämpfungsbehafteter Stoffe in Drehschwingungsdämpfern basiert das Modell lediglich auf Betriebsgrössen, die in der Steuereinheit der Maschine oder Anlage bereits vorhanden sind, wodurch keinerlei zusätzliche Sensorik benötigt wird. Fehlende Parameter werden durch konservative Schätzwerte ersetzt, im Zweifelsfall durch den jeweils maximal zulässigen Extremwert. Für Drehschwingungsdämpfer an Verbrennungsmotoren beispielsweise wird die Dissipationsleistung des Dämpfers in Abhängigkeit der Motordrehzahl und des Motordrehmoments bestimmt. Für die im thermodynamischen Modell benötigte Umgebungstemperatur des Dämpfers wird die maximal zulässige Motorraumtemperatur angesetzt. Damit arbeitet das erfindungsgemässe System nur mit im Motorsteuergerät vorhandenen Betriebsparametern und benötigt keinerlei zusätzliche Sensorik.

Bei Anwendungen mit erheblicher Variation der thermischen Randbedingungen, namentlich der Umgebungstemperatur und der Anströmverhältnisse durch die Umgebungsluft, führt die Zugrundelegung konservativer Schätzwerte bzw. Extremwerte zu teils stark pessimistischen Schätzungen des Verschleisszustands des dämpfungsbehafteten Stoffes und damit der prognostizierten (minimalen) Restlebensdauer. Die Modellgüte kann hier durch Hinzunahme von Mess- oder Schätzwerten der Temperatur sowie ggf. der Anströmverhältnisse erheblich verbessert werden. Für das Beispiel des Drehschwingungsdämpfers an einem Verbrennungsmotor kann etwa die Umgebungstemperatur des Dämpfers ermittelt bzw. geschätzt werden. Idealerweise erfolgt dies anhand einer direkten Messung durch einen Sensor, welcher sich vorzugsweise in der unmittelbaren Umgebung des Drehschwingungsdämpfers befindet, idealerweise im Bereich der Luftzufuhr und / oder im Zwischenraum zwischen Motor und Dämpfer. Alternativ kann die Umgebungstemperatur des Dämpfers aber auch indirekt anhand der Aussentemperatur sowie der vorliegenden Motorleistung und ggf. der Fahrzeuggeschwindigkeit abgeschätzt werden. Die Aussentemperatur wiederum kann entweder direkt gemessen werden, oder aber durch Datenfusion der GPS Ortung - oder durch eine Ortung eines vergleichbaren Systems - der Maschine mit allgemein im Internet verfügbaren Momentan-Temperaturdaten ermittelt werden Weitere Ausführungsvarianten sind ebenso denkbar:

- Ergänzung bzw. Ersatz des Drehschwingungsmodells durch einen Drehschwingungssensor
- Ergänzung bzw. Ersatz des Drehschwingungsmodells sowie des thermodynamischen Modells durch eine Messung der Dämpfertemperatur

Grundsätzlich kann das modellbasierte System zur prädiktiven Verschleisserkennung entweder direkt in das Steuergerät der Maschine oder Anlage integriert werden oder auch ausserhalb der Maschine auf einem Kundendienstserver installiert werden.

Für den praktischen Nutzen entscheidend ist die Prognose, ob der betreffende Drehschwingungsdämpfer das Zeitintervall bis zur nächsten regulären Wartung überlebt. Daher ist es notwendig, nicht nur den Verschleisszustand möglichst genau, sondern auch eine ausreichend konservative Prognose der Restlebensdauer zu erstellen. Für Anwendungen mit verhältnismässig konstanten bzw. sich wiederholenden Einsatzbedingungen und Lastzyklen lässt sich die zu erwartende Restlebensdauer auf Basis des Schädigungswerts sowie der mittleren Verschleissrate aus der Vergangenheit abschätzen. Für sicherheitsrelevante Anwendungen mit hoher Anforderung an die Verfügbarkeit sollte für die Wartungsplanung die minimale Restlebensdauer zugrunde gelegt werden. Diese ergibt sich unter Annahme, dass zukünftig der theoretisch maximal möglichen Verschleissrate, d.h. die Betriebsparameter mit der höchsten Temperaturentwicklung bei gleichzeitig maximal angenommener Umgebungstemperatur.

Trotz Annahme der ungünstigsten Betriebsbedingungen für die Zukunft besteht bei der Anwendung des erfindungsgemässen prädiktiven modellbasierten Systems gegenüber der klassischen Auslegung der Vorteil, dass der Schätzwert der gegenwärtigen Schädigung auf der realen Belastungshistorie basiert und damit deutlich stärker dem realen Schädigungszustand entspricht.

**Patentansprüche**

1. Verfahren zur Überwachung eines Drehschwingungsdämpfers, mit den Schritten:

   - Bestimmen mindestens eines Betriebsparameters des Antriebssystems und/oder Umweltparameters des Drehschwingungsdämpfers;
   - Bestimmen einer aktuellen Schädigungsrate anhand des mindestens einen Betriebs- und/oder Umweltparameters;
   - Integration der Schädigungsrate zur Bestimmung eines aktuellen Schädigungszustands des Drehschwingungsdämpfers.

2. Verfahren nach Anspruch 1, wobei die aktuelle Schädigungsrate nicht-linear von dem mindestens einen Betriebsparameter und/oder Umweltparameter und/oder einer hieraus berechneten Größe und insbesondere von der Temperatur des Drehschwingungsdämpfers und/oder des Dämpfungsmediums abhängt.

3. Verfahren nach Anspruch 1 oder 2, wobei die Bestimmung der aktuellen Schädigungsrate auf Grundlage eines Modells des Schädigungsverhaltens des Drehschwingungsdämpfers erfolgt, wobei es sich bevorzugt um ein physikalisch-chemisches Modell des Schädigungsverhaltens handelt.

4. Verfahren nach Anspruch 3, wobei eine erste Komponente des Modells ein aktuelles Schwingungsverhalten des Antriebssystems und des Drehschwingungsdämpfers und/oder eine hierauf beruhende Verlustleistung des Drehschwingungsdämpfers beschreibt, und/oder wobei eine zweite Komponente des Modells ein thermodynamisches Verhalten des Drehschwingungsdämpfers beschreibt und bevorzugt eine Verlustleistung des Drehschwingungsdämpfers als Eingangsgröße erhält und/oder eine Temperatur des Drehschwingungsdämpfers als Ausgangsgröße ausgibt.

5. Verfahren nach Anspruch 3 oder 4, wobei eine dritte Komponente des Modells auf Grundlage einer oder mehrerer Eingangsgrößen und insbesondere auf Grundlage der Temperatur und/oder Umgebungstemperatur des Drehschwingungsdämpfers eine aktuelle Schädigungsrate bestimmt.

6. Verfahren nach einem der vorangegangenen Ansprüche, wobei bei der Bestimmung der Schädigungsrate eine zusätzliche Abhängigkeit der Schädigungsrate vom aktuellen Verschleisszustand berücksichtigt wird, insbesondere in der dritten Komponente.

7. Verfahren nach einem der vorangegangenen Ansprüche, wobei eine oder mehrere Komponenten, welche zur Bestimmung der aktuellen Schädigungsrate eingesetzt werden, als Kennfeld implementiert sind und/oder ein implementiertes Kennfeld enthalten.

8. Verfahren nach einem der vorangegangenen Ansprüche, wobei die Temperatur des Drehschwingungsdämpfers durch einen Sensor bestimmt wird und als Eingangsgröße in die Bestimmung der aktuellen Schädigungsrate eingeht, insbesondere in die dritte Komponente.

**9.** Verfahren nach einem der vorangegangenen Ansprüche, wobei die Drehzahl und/oder die Leistung des Antriebssystems als Betriebsparameter genutzt werden und als Eingangsparameter in die Bestimmung eingehen, wobei die Drehzahl und/oder die Leistung bevorzugt von einer Antriebs- und/oder Motorsteuerung abgefragt werden, und/oder wobei eine Umgebungstemperatur und/oder eine Fahrgeschwindigkeit als Umwelt- und/oder Betriebsparameter genutzt werden und als Eingangsparameter in die Bestimmung eingehen, insbesondere in die zweite Komponente.

**10.** Verfahren nach einem der vorangegangenen Ansprüche, wobei einer oder mehrere Parameter des Schwingungsverhaltens des Drehschwingungsdämpfers, insbesondere eine aktuelle Scherrate und/oder maximale Deformation des Drehschwingungsdämpfer, bestimmt werden, insbesondere durch die erste Komponente, und als Eingangsgröße zur Bestimmung der aktuellen Schädigungsrate genutzt werden, insbesondere in der dritten Komponente.

**11.** Verfahren nach einem der vorangegangenen Ansprüche, mit dem weiteren Schritt:

- Abschätzen einer Restlebensdauer auf Grundlage des aktuellen Schädigungszustands,

wobei die Abschätzung bevorzugt unter Heranziehung einer angenommenen zukünftigen Schädigungsrate erfolgt, welche bevorzugt auf Grundlage einer mittleren Schädigungsrate in der Vergangenheit und/oder einer maximalen Schädigungsrate bestimmt wird.

**12.** Verfahren nach Anspruch 11, mit dem weiteren Schritt:

- Wartung und/oder Austausch des Drehschwingungsdämpfers, wenn die Restlebensdauer kleiner ist als ein Wartungsintervall.

**13.** System zur Überwachung eines an einem Antriebssystem angeordneten Drehschwingungsdämpfer, insbesondere zur Durchführung eines Verfahrens nach einem der vorangegangenen Ansprüche, umfassend mindestens eine Steuerung mit:

- einer Erfassungsfunktion zum Bestimmen mindestens eines Betriebs- und/oder Umweltparameters des Antriebssystems und/oder des Drehschwingungsdämpfers;
- einer Bestimmungsfunktion zum Bestimmen einer aktuellen Schädigungsrate anhand des mindestens einen Betriebs- und/oder Umweltparameters;

- einer Schädigungsakkumulationsfunktion zur Integration der Schädigungsrate zur Bestimmung eines aktuellen Schädigungszustands des Drehschwingungsdämpfers.

**14.** Antriebssystem mit einem Drehschwingungsdämpfer und einem Überwachungssystem nach Anspruch 13, wobei dieses bevorzugt in eine Steuerung des Antriebssystems integriert ist und/oder zumindest teilweise auf einem Server installiert ist, welcher mit der Steuerung des Antriebssystems kommuniziert, wobei das Antriebssystem bevorzugt einen Verbrennungsmotor und/oder E-Maschine und/oder eine hydraulische Verdrängereinheit enthält.

**15.** Mobile oder stationäre Maschine mit einem Verbrennungsmotor mit einem Drehschwingungsdämpfer und mit einem System nach Anspruch 13, wobei das System bevorzugt in eine Steuerung der Maschine und/oder des Antriebssystems integriert ist und/oder zumindest teilweise auf einem Server installiert ist, welcher mit der Steuerung kommuniziert.

**Claims**

**1.** Method for monitoring a torsional vibration damper, comprising the steps of:

- determining at least one operating parameter of the drive system and/or environmental parameter of the torsional vibration damper;
- determining a current damage rate on the basis of the at least one operating and/or environmental parameter;
- integrating the damage rate in order to determine a current damage state of the torsional vibration damper.

**2.** Method according to claim 1, wherein the current damage rate depends, in a non-linear manner, on the at least one operating parameter and/or environmental parameter, and/or a variable calculated therefrom, and in particular on the temperature of the torsional vibration damper and/or of the damping medium.

**3.** Method according to either claim 1 or claim 2, wherein the determination of the current damage rate is carried out on the basis of a model of the damage behaviour of the torsional vibration damper, wherein it is preferably a physical-chemical model of the damage behaviour.

**4.** Method according to claim 3, wherein a first component of the model describes a current vibration behaviour of the drive system and of the torsional vibration damper, and/or a dissipation loss of the torsional vibration damper based thereon, and/or wherein a second component of the model describes a thermodynamic behaviour of the torsional vibration damper and preferably receives a dissipation loss of the torsional vibration damper as an input variable and/or emits a temperature of the torsional vibration damper as the output variable.

5. Method according to either claim 3 or claim 4, wherein a third component of the model determines a current damage rate on the basis of one or more input variables and in particular on the basis of the temperature and/or ambient temperature of the torsional vibration damper.

6. Method according to any of the preceding claims, wherein during the determination of the damage rate an additional dependency of the damage rate on the current wear state is taken into account, in particular in the third component.

7. Method according to any of the preceding claims, wherein one or more components which are used for determining the current damage state are implemented as a characteristic map and/or contain an implemented characteristic map.

8. Method according to any of the preceding claims, wherein the temperature of the torsional vibration damper is determined by a sensor and enters the determination of the current damage rate as an input variable, in particular in the third component.

9. Method according to any of the preceding claims, wherein the speed and/or the power of the drive system are used as operating parameters and enter the determination as input parameters, wherein the speed and/or the power are preferably retrieved from a drive and/or engine controller, and/or wherein an ambient temperature and/or a travel speed are used as environmental and/or operating parameters and enter the determination as input parameters, in particular in the second component.

10. Method according to any of the preceding claims, wherein one or more parameters of the vibration behaviour of the torsional vibration damper, in particular a current shear rate and/or maximum deformation of the torsional vibration damper, are determined, in particular by the first component, and are used as input variables for determining the current damage rate, in particular in the third component.

11. Method according to any of the preceding claims, having the further step of:

   - estimating a remaining lifetime on the basis of the current damage state, wherein the estimation preferably takes place under consultation of an assumed future damage rate which is preferably determined on the basis of an average damage rate in the past and/or a maximum damage rate.

12. Method according to claim 11, having the further step of:

   - maintenance and/or replacement of the torsional vibration damper if the remaining lifetime is less than a maintenance interval.

13. System for monitoring a torsional vibration damper arranged on a drive system, in particular for carrying out a method according to any of the preceding claims, comprising at least one controller having:

   - a detection function for determining at least one operating and/or environmental parameter of the drive system and/or of the torsional vibration damper;
   - a determination function for determining a current damage rate on the basis of the at least one operating and/or environmental parameter;
   - a damage accumulation function for integrating the damage rate in order to determine a current damage state of the torsional vibration damper.

14. Drive system comprising a torsional vibration damper and a monitoring system according to claim 13, wherein this is preferably integrated into a controller of the drive system and/or is installed on a server, at least in part, which server communicates with the controller of the drive system, wherein the drive system preferably contains an internal combustion engine and/or electric machine and/or a hydraulic displacer unit.

15. Mobile or stationary machine comprising an internal combustion engine comprising a torsional vibration damper and comprising a system according to claim 13, wherein the system is preferably integrated into a controller of the machine and/or of the drive system, and/or is installed on a server, at least in part, which communicates with the controller.

**Revendications**

1. Procédé de surveillance d'un amortisseur de vibrations de torsion, avec les étapes :

   - de définition d'au moins un paramètre de fonctionnement du système d'entraînement et/ou d'un paramètre d'environnement de l'amortisseur de vibrations de torsion ;
   - de définition d'une vitesse de détérioration instantanée à l'aide de l'au moins un paramètre de fonctionnement et/ou d'environnement ;
- d'intégration de la vitesse de détérioration pour définir un état de détérioration instantané de l'amortisseur de vibrations de torsion.

2. Procédé selon la revendication 1, dans lequel la vitesse de détérioration instantanée dépend de manière non linéaire de l'au moins un paramètre de fonctionnement et/ou paramètre d'environnement et/ou d'une grandeur calculée sur cette base et en particulier de la température de l'amortisseur de vibrations de torsion et/ou du milieu d'amortissement.

3. Procédé selon la revendication 1 ou 2, dans lequel la définition de la vitesse de détérioration instantanée est effectuée sur la base d'un modèle du comportement de détérioration de l'amortisseur de vibrations de torsion, dans lequel il s'agit de manière préférée d'un modèle physico-chimique du comportement de détérioration.

4. Procédé selon la revendication 3, dans lequel un premier composant du modèle décrit un comportement de vibrations instantané du système d'entraînement et de l'amortisseur de vibrations de torsion et/ou une dissipation de puissance se basant sur celui-ci de l'amortisseur de vibrations de torsion, et/ou dans lequel une deuxième composante du modèle décrit un comportement thermodynamique de l'amortisseur de vibrations de torsion et obtient de manière préférée une dissipation de puissance de l'amortisseur de vibrations de torsion en tant que grandeur d'entrée et/ou émet une température de l'amortisseur de vibrations de torsion en tant que grandeur de sortie.

5. Procédé selon la revendication 3 ou 4, dans lequel une troisième composante du modèle définit, sur la base d'une ou de plusieurs grandeurs d'entrée et en particulier sur la base de la température et/ou de la température d'environnement de l'amortisseur de vibrations de torsion, une vitesse de détérioration instantanée.

6. Procédé selon l'une quelconque des revendications précédentes, dans lequel une dépendance supplémentaire de la vitesse de détérioration de l'état d'usure instantané est prise en compte lors de la définition de la vitesse de détérioration, en particulier dans la troisième composante.

7. Procédé selon l'une quelconque des revendications précédentes, dans lequel une ou plusieurs composantes, lesquelles sont employées pour définir la vitesse de détérioration instantanée, sont implémentées en tant que diagramme caractéristique et/ou contiennent un diagramme caractéristique implémenté.

8. Procédé selon l'une quelconque des revendications précédentes, dans lequel la température de l'amortisseur de vibrations de torsion est définie par un capteur et est intégrée en tant que grandeur d'entrée dans la définition de la vitesse de détérioration instantanée, en particulier dans la troisième composante.

9. Procédé selon l'une quelconque des revendications précédentes, dans lequel la vitesse de rotation et/ou la puissance du système d'entraînement sont utilisées en tant que paramètres de fonctionnement et sont intégrées dans la définition en tant que paramètres d'entrée, dans lequel la vitesse de rotation et/ou la puissance sont consultées de manière préférée par une commande d'entraînement et/ou de moteur, et/ou dans lequel une température d'environnement et/ou une vitesse de déplacement sont utilisées en tant que paramètres d'environnement et/ou de fonctionnement et sont intégrées dans la définition en tant que paramètres d'entrée, en particulier dans la deuxième composante.

10. Procédé selon l'une quelconque des revendications précédentes, dans lequel un ou plusieurs paramètres du comportement de vibration de l'amortisseur de vibrations de torsion, en particulier un taux de cisaillement instantané et/ou une déformation maximale de l'amortisseur de vibrations de torsion, sont définis, en particulier par la première composante, et sont utilisés en tant que grandeur d'entrée pour définir la vitesse de détérioration instantanée, en particulier dans la troisième composante.

11. Procédé selon l'une quelconque des revendications précédentes, avec l'étape supplémentaire :

    - d'évaluation d'une durée de vie restante sur la base de l'état de détérioration instantanée,

dans lequel l'évaluation est effectuée de manière préférée en tenant compte d'une vitesse de détérioration future supposée, laquelle est définie de manière préférée sur la base d'une vitesse de détérioration moyenne dans le passé et/ou d'une vitesse de détérioration maximale.

12. Procédé selon la revendication 11, avec l'étape supplémentaire :

    - de maintenance et/ou de remplacement de l'amortisseur de vibrations de torsion quand la durée de vie restante est inférieure à un intervalle de maintenance.

13. Système de surveillance d'un amortisseur de vibrations de torsion disposé sur un système d'entraînement, en particulier pour mettre en oeuvre un procédé selon l'une quelconque des revendications précédentes, comprenant au moins une commande avec :

- une fonction de détection pour définir au moins un paramètre de fonctionnement et/ou d'environnement du système d'entraînement et/ou de l'amortisseur de vibrations de torsion ;
- une fonction de définition pour définir une vitesse de détérioration instantanée à l'aide de l'au moins un paramètre de fonctionnement et/ou d'environnement ;
- une fonction d'accumulation de détériorations pour intégrer la vitesse de détérioration pour définir un état de détérioration instantané de l'amortisseur de vibrations de torsion.

14. Système d'entraînement avec un amortisseur de vibrations de torsion et un système de surveillance selon la revendication 13, dans lequel celui-ci est intégré de manière préférée dans une commande du système d'entraînement et/ou est installé au moins en partie sur un serveur, lequel communique avec la commande du système d'entraînement, dans lequel le système d'entraînement contient de manière préférée un moteur à combustion interne et/ou une machine électrique et/ou un ensemble déplaceur hydraulique.

15. Machine mobile ou stationnaire avec un moteur à combustion interne avec un amortisseur de vibrations de torsion et avec un système selon la revendication 13, dans laquelle le système est intégré de manière préférée dans une commande de la machine et/ou du système d'entraînement et/ou est installé au moins en partie sur un serveur, lequel communique avec la commande.

Fig. 1

1 Gehäuse
2 Welle
3 Trägheitsring
4 Viskoseöl

# Fig. 2

EP 3 779 234 B1

1  Nabe

2  Welle

3  Trägheitsring

4  Elastomer

18

# Fig. 3

1     Nabe

2     Welle

3     Gehäuse mit Trägheitsring

4     Blattfeder

5     Zwischenstück

6     Fluidkammer

7     Spalt

**Fig. 4**

Start
Inbetriebnahme des Dämpfers;
Schädigung = 0

Modellbasierte Abschätzung der Restlebensdauer

Prädiktiver Wartungszyklus

Erfassung der momentanen Betriebs- und Umweltparameter

Betriebsparameter

Umweltparameter

Berechnung der Schädigungsrate $\dot{D}$

Schädigungsakkumulation
$$D = D + \dot{D} \cdot \Delta t$$

Abschätzung der Restlebensdauer

Wartungsintervall

Restlebensdauer Dämpfer grösser als Wartungsintervall?

ja

nein

Wartungs- bzw. Austauschmassnahme;
Schädigung = 0

EP 3 779 234 B1

**Fig. 5**

Fig. 6

$$t_{tot} = \cfrac{1}{\kappa \dot{D}_V + (1-\kappa)\, \dot{D}_L}$$

**Fig. 7**

NRTC
Auslegungsprofil

Motordrehzahl $N$

Motorlast $p$

Fig. 8

# Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7334552 B2
- DE 102006015867
- EP 0478529 A
- EP 2143973 A
- EP 3242055 B1